# FASCICULE DE BREVET EUROPEEN

(11) **EP 1 774 774 B1**
(45) Date de publication et mention de la délivrance du brevet: **05.06.2013**
(21) Numéro de dépôt: 05777844.1
(22) Date de dépôt: 02.08.2005
(51) Int. Cl.: H04N 21/434, H04N 21/236, H04N 21/443, H04N 21/458

(54) **METHODE DE MISE A JOUR DU LOGICIEL RESIDENT DANS DIFFERENTS APPAREILS ET APPAREILS ADAPTES A SE METTRE A JOUR PAR LA METHODE**
VERFAHREN ZUR AKTUALISIERUNG VON SOFTWARE AUF VERSCHIEDENEN GERÄTEN UND ENTSPRECHENDE SOFTWARE-AKTUALISIERBARE GERÄTE
METHOD FOR UPDATING RESIDENT SOFTWARE IN DIFFERENT APPLIANCES AND APPLIANCES ADAPTED TO BE UPDATED BY SAME

(30) Priorité: 04.08.2004 FR 0451779
(43) Date de publication de la demande: 18.04.2007
(73) Titulaire: Thomson Licensing, 92130 Issy-les-Moulineaux (FR)
(72) Inventeur: ALBERT, Frédérique, F-35700 RENNES (FR); BOUSSAAD, Hamid, F-35520 LA MEZIERE (FR); GAUTIER, Eric, F-35700 RENNES (FR); JUMPERTZ, Jean-Luc, F-35000 RENNES (FR); RABOISSON, Stéphane, F-35790 GAHARD (FR)
(74) Mandataire: Le Dantec, Claude
(86) Numéro de dépôt international: PCT/EP2005/053768
(87) Numéro de publication internationale: WO 2006/013204

(56) Documents cités:
- EP-A- 0 828 386
- EP-A- 1 437 893
- US-A- 5 666 293
- US-A1- 2003 028 899
- US-B1- 6 453 470

## Description

La présente invention concerne la mise-à-jour du logiciel résident contenu dans des appareils. Le contexte est plus particulièrement la mise-à-jour par distribution dans un flux du logiciel de gestion de l'appareil.

Il est connu, en particulier dans le domaine des appareils de réception de télévision numérique couramment appelés décodeurs numériques de télévision, de distribuer dans des flux de type flux de transport MPEG (MPEG-2 System : ISO/IEC, 1994. Generic Coding of Moving Pictures and Associated Audio : Systems, (MPEG-2 Systems Specification), November, ISO/IEC 13818-1) des versions de mise-à-jour du logiciel résident dans le décodeur. On entend par logiciel résident l'ensemble logiciel embarqué dans un appareil et servant à le faire fonctionner. Dans ce domaine, une version donnée de logiciel résident s'applique généralement à un décodeur en fonction, entre autres, de la version matérielle de ce décodeur, de l'opérateur gérant le décodeur voire de l'usage prévu pour ce décodeur. Il est habituel de construire un flux MPEG, appelé flux de téléchargement, contenant une version du logiciel résident destiné à la mise-à-jour d'un type bien défini de décodeur.

Le brevet US 5,666,293 (Metz et al.) décrit le téléchargement de systèmes d'exploitation par un canal de diffusion. Le brevet US 6,453,470 (Gazda et al.) décrit la détection dynamique de configuration matérielle dans un terminal numérique. Les documents EP-A-0828386, US2003028899, JP11102287, US5619700 et US7430735 décrivent des autres exemples de systèmes de mise à jour du logiciel résident.

A l'origine du déploiement des décodeurs numériques, chaque flux de mise-à-jour transportait l'ensemble des segments constituant le logiciel fonctionnel et était adressé à un type de plates-formes particulier. Au fur et à mesure de l'extension du parc d'abonnés les opérateurs ont souvent fait appel à de nouveaux industriels pour diversifier leurs fournisseurs de décodeurs. Ces derniers ont eux-mêmes cherchés à réduire le coût des équipements en fournissant de nouveaux décodeurs basés sur de nouvelles versions matérielles. Le parc matériel est alors devenu hétérogène et le besoin en bande passante allouée aux flux de téléchargement est devenu plus important.

En même temps, pour les différentes versions matérielles de décodeurs qu'un industriel fournit à un opérateur, les versions logiciel correspondantes partagent souvent des segments de code communs. Ces segments sont en général plus particulièrement situés dans les couches hautes de l'architecture logiciel (piles de protocole, applications, interface...).

On rencontre un problème identique chez les industriels qui utilisent le téléchargement de logiciel dans les phases de production. En effet ils peuvent être amenés à fabriquer à un moment donné sur une même chaîne de production et à partir d'une même version matérielle de matériel, des décodeurs pour différents opérateurs, ces décodeurs étant téléchargés avec des versions logiciel différentes, ces versions de logiciel partageant des segments de code communs. Ces segments sont en général plus particulièrement situés dans les couches basses de l'architecture logiciel (système d'exploitation, pilotes...).

Le problème technique consiste donc à diminuer les besoins en bande passante allouée au flux de téléchargement et ceci aussi bien pour l'opérateur que l'industriel. Ce problème peut s'énoncer de la manière suivante :

Comment un opérateur peut diminuer le débit alloué aux flux transportant différentes versions de logiciel dédiées à des plates-formes différentes, quand ces différentes versions de logiciel partagent des segments de code communs (piles de protocole, applications, interface...) ?

Comment un industriel peut améliorer son processus de fabrication en diminuant le débit alloué aux flux de téléchargement diffusés dans ses usines de production, quand ceux ci sont utilisés pour télécharger sur une même plate-forme, différentes versions de logiciel dédiées à différents opérateurs, ces différentes versions de logiciel présentant des segments de code communs (système d'exploitation, pilotes...) ?

En corollaire à ces problèmes on peut ajouter comment diminuer le temps de téléchargement pour améliorer l'expérience de l'utilisateur?

L'invention permet de mélanger dans un même flux différentes versions de logiciel à destination de différents décodeurs. Le principe est de définir un format de données unique qui permet de mettre à jour un décodeur à partir d'un flux transportant les segments binaires de plusieurs versions de logiciel résident, ces segments binaires étant composés de segments communs à plusieurs versions de logiciel et de segments spécifiques à chacun des versions de logiciel.

En corollaire la procédure mise en oeuvre par le loader pour récupérer les segments de code dédiés à une version matérielle de décodeur est plus complexe. Néanmoins cette procédure peut être améliorée pour faire en sorte que le loader ne cherche à récupérer que les segments de code qui doivent être mis à jour.

L'invention concerne une méthode de construction d'un support de distribution contenant une pluralité de versions de logiciel résident à destination d'une pluralité d'appareils conformément à la revendication 1 ci-jointe.

Selon un mode particulier de réalisation l'invention comporte en outre une étape de marquage de chaque segment par un moyen d'identification des appareils visés par la ou les versions de logiciel résident dont le segment fait partie.

Selon un mode particulier de réalisation de l'invention la pluralité d'appareils est une pluralité d'appareils de réception de télévision numériques.

Selon un mode particulier de réalisation de l'invention le support de distribution est un flux de transport MPEG.

L'invention concerne également une méthode d'acquisition de tout ou partie d'une version de logiciel résident par un appareil possédant des moyens d'accès à un support de distribution distribué par un réseau de la distribution conformément à la revendication 5 ci-jointe.

Selon un mode particulier de réalisation de l'invention l'étape d'identification au sein du support de distribution comporte une étape de comparaison d'un jeu d'identificateurs identifiant au sein de chaque segment les appareils visés par la version de logiciel résident auquel le segment appartient et un jeu d'identificateurs résident sur l'appareil et codant son type et son utilisation.

Selon un mode particulier de réalisation de l'invention le jeu de d'identificateurs contient au moins un identificateur de plate-forme identifiant le type précis de version matérielle de l'appareil, un identificateur de produit identifiant l'opérateur opérant l'appareil et un identificateur d'usage identifiant l'usage prévu de l'appareil.

Selon un mode particulier de réalisation de l'invention l'appareil est un récepteur de télévision numérique et le support de distribution un flux de transport MPEG.

L'invention concerne également un support de distribution d'une pluralité de versions de logiciel résident à destination d'une pluralité d'appareils conformément à la revendication 9 ci-jointe.

Selon un mode particulier de réalisation de l'invention chaque segment possède un jeu d'identificateurs identifiant au sein de chaque segment les appareils visés par la version de logiciel résident auquel le segment appartient.

Selon un mode particulier de réalisation de l'invention le jeu de d'identificateurs contient au moins un identificateur de plate-forme identifiant le type précis de version matérielle de l'appareil, un identificateur de produit identifiant l'opérateur opérant l'appareil et un identificateur d'usage identifiant l'usage prévu de l'appareil.

Selon un mode particulier de réalisation de l'invention le support a la forme d'un flux de transport MPEG.

L'invention concerne également un appareil possédant des moyens d'accès à un support de distribution contenant une pluralité de versions de logiciel résident à destination d'une pluralité d'appareils conformément à la revendication 13 ci-jointe.

Selon un mode particulier de réalisation de l'invention l'appareil possède un jeu d'identificateurs codant son type et son utilisation et des moyens de comparaison de ce jeu d'identificateurs avec un jeu d'identificateurs présent au sein de chaque segment présent au sein du support de distribution et identifiant les appareils visés par la version de logiciel résident auquel le segment appartient.

Selon un mode particulier de réalisation de l'invention les moyens d'accès à un support de distribution sont des moyens d'accès à un flux de transport MPEG.

L'invention sera mieux comprise, et d'autres particularités et avantages apparaîtront à la lecture de la description qui va suivre, la description faisant référence aux dessins annexés parmi lesquels :
La figure 1 montre l'architecture connue d'un système de diffusion de logiciel de téléchargement sur un parc de décodeurs.
La figure 2 montre un exemple d'architecture logicielle d'un décodeur.

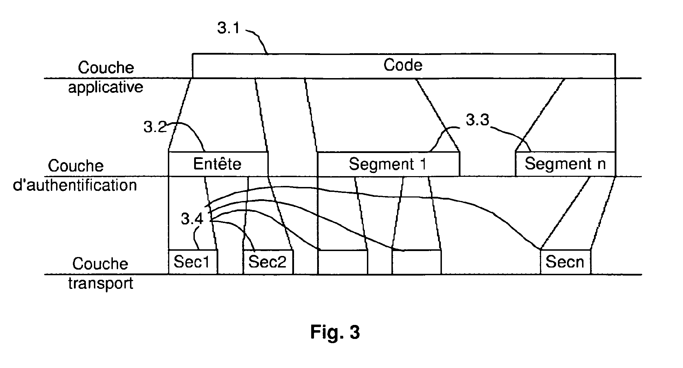

La figure 3 montre les différents niveaux de découpages du logiciel résident dans un exemple de réalisation de l'invention.
La figure 4 montre le segment d'entête dans l'exemple de réalisation de l'invention.
La figure 5 montre le format de la section MPEG dans l'exemple de réalisation de l'invention.
La figure 6 montre les étapes de la méthode utilisée par le décodeur pour retrouver les segments qu'il doit télécharger dans l'exemple de réalisation de l'invention.
La figure 7 montre l'architecture d'un décodeur selon l'exemple de réalisation de l'invention.

Un exemple de réalisation de l'invention va maintenant être décrit. Cet exemple se situe dans le domaine des décodeurs de télévision numérique, mais l'invention peut s'appliquer à tout appareil possédant un logiciel résident susceptible d'être mis à jour au travers d'un moyen de diffusion général. On peut citer par exemple des lecteurs de DVD mis à jour par un DVD unique contenant des versions de logiciel destinées à différentes plate-formes ou autre.

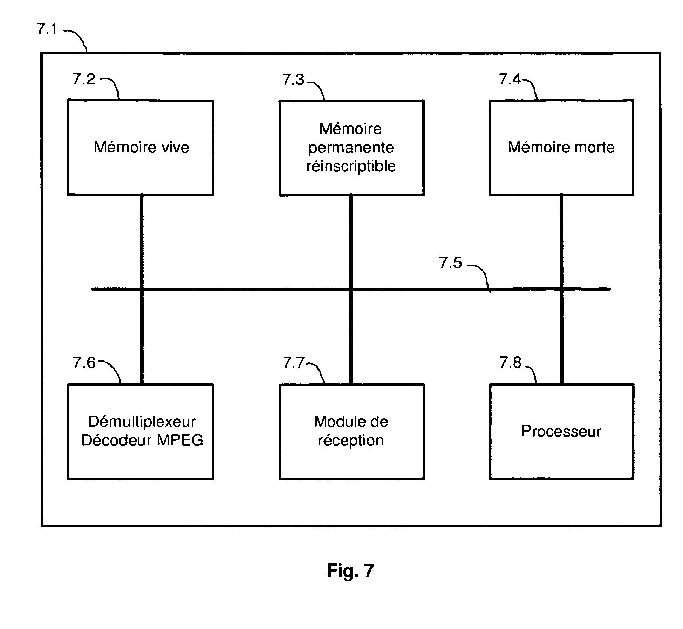

La figure 7 illustre l'architecture d'un décodeur référencé 7.1 selon un exemple de réalisation de l'invention. Ce décodeur est constitué d'un module de réception référencé 7.7 (« Tuner » en anglais) permettant la réception des flux contenant les services audio et vidéo. Ce module peut être un module satellite, câble, terrestre voire une interface de connexion réseau de type IP. Les flux issus de ce module de réception seront ensuite traités par le démultiplexeur/décodeur MPEG référencé 7.6. Ce module va être en charge de la vérification des droits et du décryptage du flux si nécessaire. Ensuite le service désiré sera isolé dans le flux, en effet un même flux peut contenir un multiplexage de plusieurs services audio et vidéo. Une fois le service désiré isolé, les différents flux élémentaires en sont extraits. Ces flux se composent généralement au minimum d'un flux vidéo et d'un flux audio compressés, généralement aujourd'hui, selon la norme MPEG-2 mais l'invention fonctionne quel que soit le format des services, comme MPEG-4 ou autre. Ces flux sont donc décompressés puis convertis en analogique pour fournir une sortie vidéo et une sortie audio. Toutes ces opérations sont pilotées par un logiciel résident stocké de manière répartie entre la mémoire morte référencée 7.4 et la mémoire permanente réinscriptible référencée 7.3. La mémoire vive référencée 7.2 va servir, quant à elle, de mémoire de travail pour l'exécution du logiciel résident.

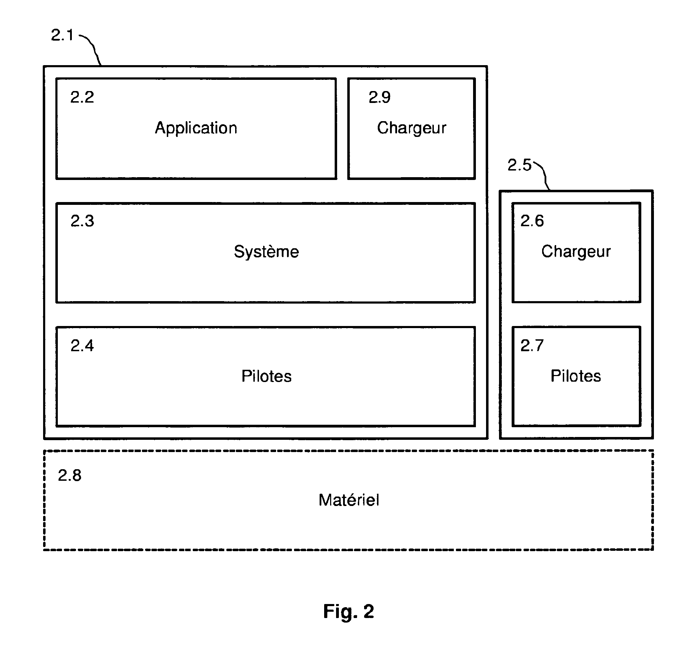

La figure 2 illustre schématiquement les différents blocs entrant dans la composition du logiciel résident présent sur l'exemple de réalisation de l'invention. Ce logiciel résident fonctionne sur le matériel, référencé 2.8, que nous avons décrit plus haut. Il se compose de deux parties, une première, référencée 2.5, consiste en un chargeur référencé 2.6 et d'un ensemble minimal de pilotes, référencé 2.7, permettant à ce chargeur de fonctionner. Typiquement ce chargeur et ses pilotes sont stockés en mémoire permanente non réinscriptible de façon à garantir leur intégrité au cours du temps. En effet ce chargeur a pour fonction de permettre la mise-à-jour du logiciel du décodeur et doit pouvoir fonctionner en tout état de cause quel que soit l'état du logiciel résident stocké dans la mémoire réinscriptible, sa corruption ne doit pas être possible.

L'autre partie du logiciel résident, référencée 2.1, consiste en un jeu complet de pilotes, référencés 2.4, permettant la gestion du matériel. Au-dessus de ces pilotes se trouve un système d'exploitation, référencé 2.3, offrant un ensemble de fonctionnalités génériques reposant sur les pilotes. L'application, référencée 2.2, comporte le logiciel de haut niveau qui va apporter à l'utilisateur les fonctionnalités de son décodeur. Il est composé d'une interface homme-machine et implémente les fonctionnalités telles que le changement de service, la gestion du moteur d'interactivité éventuel, des applications interactives et autre. Il est courant que cette partie comporte aussi un chargeur, référencé 2.9, permettant la mise-à-jour de cet ensemble logiciel référencé 2.1. Ce chargeur, peut lui-même être mis à jour. En effet, lorsqu'il télécharge une nouvelle version du logiciel système, celui-ci peut contenir une nouvelle version de ce chargeur qui va être mise en mémoire en lieu et place du chargeur référencé 2.9. Si un problème se produit lors de cette mise-à-jour, le chargeur référencé 2.6 stocké en mémoire permanente sera toujours en mesure de permettre une nouvelle mise-à-jour du logiciel permettant de résoudre le problème et de retrouver une version opérationnelle de la partie logicielle référencée 2.1 du logiciel et donc du chargeur en faisant partie référencé 2.9.

Le besoin d'effectuer un téléchargement de logiciel dans un décodeur peut avoir plusieurs causes. La première cause est la corruption du logiciel installé. En effet, la partie logicielle référencée 2.1 étant stockée en mémoire réinscriptible, il est toujours possible qu'elle se retrouve corrompue. Dans ce cas, la corruption est détectée au démarrage suivant de l'appareil qui va vérifier par un système de CRC (« Cyclic Redondancy Check ») l'intégrité des modules composant le logiciel. Si une corruption est détectée dans un module autre que le chargeur, celui-ci va être utilisé pour télécharger une nouvelle version intègre du logiciel. Il est ici possible, soit de mettre à jour une nouvelle version complète du logiciel système ou simplement des modules détectés comme corrompus. Lorsque le chargeur lui-même est détecté comme corrompu la mise-à-jour est confiée au chargeur permanent référencé 2.6.

Une autre cause de téléchargement est la disponibilité d'une nouvelle version du logiciel résident. Cette nouvelle version pouvant corriger des erreurs présentes dans la version courante et/ou ajouter de nouvelles fonctionnalités à ce logiciel résident. Dans ce cas la détection par le décodeur, lors de sa phase de démarrage, d'une nouvelle version va provoquer, éventuellement sous certaines conditions, le téléchargement de cette nouvelle version par le chargeur référencé 2.9 et son installation dans le décodeur.

Il est également généralement possible de provoquer le téléchargement et l'installation d'une version donnée de logiciel. Dans ce cas, l'utilisateur, où le technicien agréé après déverrouillage d'une éventuelle protection, va pouvoir préciser la version de logiciel résident qu'il désire installer sur l'appareil et provoquer son téléchargement. Ceci peut être fait lors d'opérations de maintenance ou lors de la préparation des appareils en usine avant livraison. De cette manière il est toujours possible de configurer un appareil avec une version choisie de logiciel système en fonction de l'usage auquel on destine l'appareil.

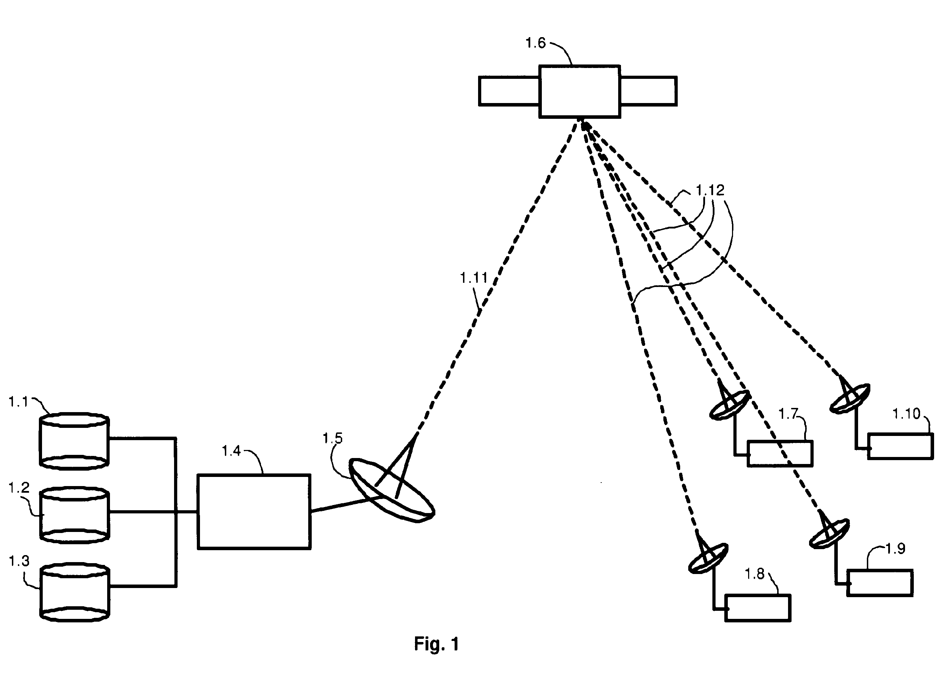

L'infrastructure typique de téléchargement est décrite dans la figure 1. L'ensemble d'une version de logiciel destiné à un appareil est constitué de différents modules formant entre autres les pilotes, le système d'exploitation et la couche applicative. Ces modules référencés 1.1, 1.2 et 1.3 vont être assemblés et mélangés dans un flux de transport MPEG sur un mélangeur référencé 1.4. Ce flux va être émis par une station d'émission référencée 1.5 vers un satellite référencé 1.6 qui va le diffuser à destination des décodeurs référencés 1.7 à 1.10. L'infrastructure ici décrite est celle de la diffusion par satellite, mais le schéma est le même pour un autre type de diffusion qui peut être le câble, le terrestre où même un réseau interne au sein d'une usine de fabrication. Dans ce cas le flux calculé par le mélangeur référencé 1.4 sera émis par un serveur chargé de fabriquer le signal à destination du décodeur. De manière classique, le flux de téléchargement construit va contenir une version du logiciel à destination d'un type donné de décodeur mais dans le cadre de l'invention il sera possible de mélanger des modules appartenant à plusieurs versions de logiciel dans ce flux.

Un certain nombre d'identificateurs sont utilisés pour marquer les versions de logiciel résident et déterminer les décodeurs concernés. On va trouver principalement les identificateurs suivants qui vont jouer un rôle déterminant dans le processus de téléchargement :
- L'identificateur de plate-forme, composé en fait de l'agrégation de deux identificateurs, PT indiquant le type de plate-forme ce qui correspond au modèle de décodeur et PV permettant d'indiquer le numéro de version dans le type de plate-forme. Cet identificateur permet donc d'identifier précisément un modèle matériel de décodeur.
- L'identificateur de produit, PR, qui va identifier généralement l'opérateur utilisant le décodeur. En effet, un même décodeur matériel ne va pas utiliser le même logiciel en fonction de l'opérateur qui va le déployer.
- L'identificateur d'usage, US, qui va permettre pour une même plate-forme et un même produit de différencier l'usage qui sera fait de la plate-forme. On peut ainsi différencier, par exemple, une plate-forme destinée à un abonné d'une plate-forme destinée au test ou autre.

Un jeu de ces identificateurs est mémorisé dans le décodeur permettant de connaître le modèle exact de plate-forme, l'opérateur et l'usage auquel est destiné ce décodeur. Les flux de téléchargement contiennent également un jeu des ces identificateurs permettant de connaître les décodeurs pour lesquels le logiciel contenu est créé. Dans le cadre de l'invention chaque segment possédera son propre jeu de paramètre.

De manière connue lorsqu'un décodeur doit se mettre à jour avec une nouvelle version de logiciel pour les raisons décrites précédemment, il va utiliser des paramètres internes lui permettant d'identifier le flux contenant la version de logiciel qui lui est destiné. Il se connecte alors sur ce flux et vérifie que les identificateurs de plate-forme, de produit et d'usage contenu dans le flux correspondent bien à ceux qu'il possède. Dans ce cas il va télécharger le logiciel contenu dans le flux et le mémoriser.

Dans le cadre de l'exemple de réalisation de l'invention le mécanisme de mise-à-jour est basé sur la transmission de segments binaires référencés 3.3. Ces segments correspondent à un découpage des images mémoires, référencées 3.1, des différentes versions de logiciel résident que l'on veut mélanger dans le flux. Ces segments peuvent correspondre directement aux différents modules composant les versions de logiciel résident ou être le résultat d'un autre mode de découpage. Ces segments de code sont précédés d'un segment entête référencé 3.2 qui décrit l'ensemble des segments de code diffusés. L'ensemble des segments est transporté à travers des sections MPEG référencées 3.4. En effet les flux de transports MPEG sont composés d'une succession de sections de 188 octets.

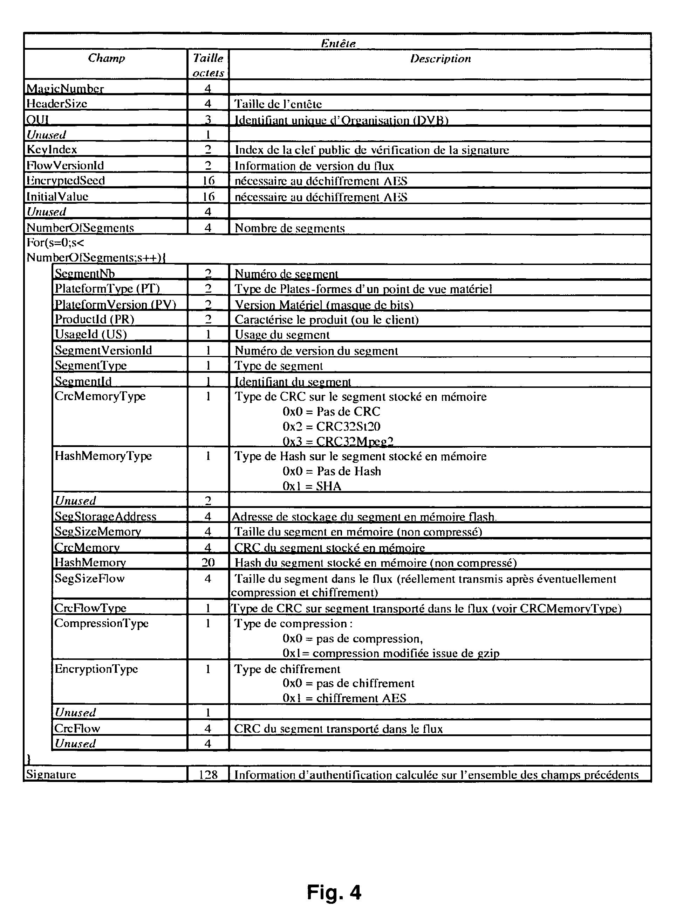

Le segment « entête » illustré figure 4 est lui-même composé d'un « entête » puis d'une boucle décrivant chacun des segments de code inclus dans le flux et d'un champ signature qui permet d'authentifier ce segment d'entête et son contenu.

L'entête du segment « entête » comprend les champs suivants :
- « OUI » spécifié par DVB (« Digital Video Broadcast », le consortium chargé de définir les standards de diffusion numérique) permet d'identifier de manière unique chaque industriel et donc chaque segment décrit par l'entête
- « Key Index » nécessaire à l'authentification du flux dans le cas où on utiliserait un algorithme basé sur des clés publiques. Il permet d'identifier la clé publique à utiliser pour authentifier le flux
- « FlowVersionld » permet de connaître une évolution du contenu du flux. Cette information peut éventuellement être diffusée dans la signalisation et permettre alors au décodeur de déclencher un téléchargement à chaque fois qu'elle évolue
- « EncryptedSeed, InitialValue » informations nécessaires au déchiffrement des segments

Pour chacun des segments on trouve les informations suivantes :
● « PlateformType, PlateformeVersion » permettent d'identifier la plate-forme matérielle dans laquelle devra être chargé le segment. Un segment commun à toutes les plate-formes sera identifié de manière unique par un couple « (PlateformType, PlateformeVersion) = any »
● « Productld » permet d'identifier le produit ou le client. Un segment commun à tous les produits sera identifié de manière unique par un « Productld = any »
● « Usageld » permet d'identifier l'usage du décodeur dans le parc (abonné, test...). Un segment commun à tous les usages sera identifié de manière unique par un « Usageld = any »
● « SegmentVersionld » identifie la version du segment. Il est utiliser pour savoir si un segment est déjà présent dans le décodeur et ne nécessite pas d'être téléchargé.
● « SegmentType, Segmentld » correspondent respectivement au type de segment (système d'exploitation, pilotes, interface, ...) et à son identifiant dans le type.
● « CrcMemoryType » : Type de CRC (« Cyclic Redondancy Check ») calculé sur le segment stocké en mémoire.
● « HashMemoryType » : Type de hachage calculé sur le segment stocké en mémoire. Nécessaire pour vérifier l'authentification du flux.
● « SegStorageAdress » : Adresse de stockage du segment en mémoire
● « SegSizeMemory »: Taille du segment en mémoire (segment non compressé)
● « CrcFlowType » : Type de CRC calculé sur le segment transporté dans le flux. Nécessaire pour vérifier l'intégrité des segments lors de la réception
● « CompressionType » : Type de compression sur le segment transporté dans le flux. Permet de savoir si le segment est compressé ou non et quel algorithme de compression a été utilisé.
● « EncryptionType » : Type de chiffrement sur le segment transporté dans le flux Permet de savoir si le segment est chiffré ou non et quel algorithme de chiffrement a été utilisé.
● « CrcFlow » : CRC du segment transporté dans le flux

On trouve enfin :
« Signature » : information permettant d'authentifier le flux

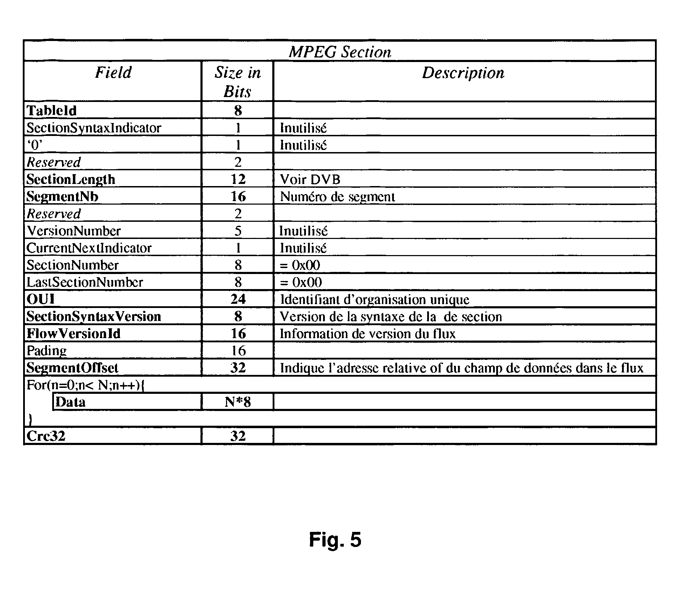

Le format de transport est basé sur le format de transport en sections MPEG illustré figure 5. On y retrouve les informations « OUI », « SegmentNb », « FlowVersionld » décrites ci-dessus. Ces informations seront utilisées pour récupérer les données transmises dans le flux.

De cette façon il est possible de mélanger dans le même flux les segments appartenant à différentes images mémoires correspondant à des versions différentes de logiciel résident. Chaque segment possédant son propre jeu de paramètres PT, PV, PR et US, la destination de chaque segment est définie. D'autre part, le fait de donner à certains de ces paramètres la valeur « any » permet de ne pas dupliquer les segments à partager entre différentes versions de logiciel. En effet un segment partagé entre les différentes versions de logiciel d'un produit donné destinées à toutes les plate-formes matérielles va être marqué avec PR égal à la valeur du produit et (PT, PV) égal à « any » et de même pour les autres paramètres. Pour ce faire, on va commencer par identifier dans les différentes versions de logiciel résident à assembler dans le flux les parties communes à au moins deux de ces versions. Chaque module est en effet marqué par configuration, ou autre, avec un jeu de paramètres PT, PV, PR et US indiquant sa destination. L'analyse de ces paramètres permet donc d'identifier les modules communs à plusieurs versions. Ensuite, lors du découpage de ces modules en segments, chaque segment va être marqué avec le jeu de paramètre PT, PV, PR et US lui correspondant, les segments communs n'étant pas dupliqués lors de la construction du support de distribution, ici le flux MPEG.

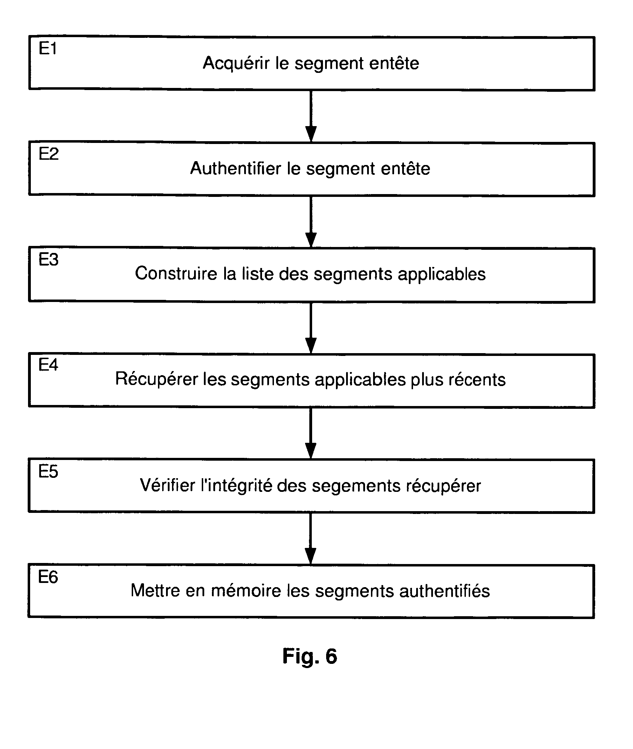

Les étapes principales de téléchargement sont illustrées figure 6.

Une première étape, référencée E1, consiste à acquérir le segment entête par un filtrage section sur les champs « Tableld, SegmentNb=0, OUI, SectionSyntaxVersion, FlowVersionld ».

Une seconde étape référencée E2 consiste à vérifier l'authentification de ce segment entête grâce à sa signature.

Une troisième étape référencée E3 consiste à construire la liste des segments correspondant au décodeur effectuant le téléchargement en extrayant successivement (voir table ci-dessous):
1. les segments dédiés à la plate-forme (PT, PV), au produit PR et à l'usage US du décodeur effectuant le téléchargement.
2. les segments dédiés à la plate-forme, au produit, avec US=any.
3. les segments dédiés à la plate-forme avec (PT, PV)=any. Dans ce cas la valeur de US est ignorée
4. les segments dédiés au produit, à l'usage avec (PT, PV)=any.
5. les segments dédiés au produit avec (PT, PV)=any, US=any.
6. les segments génériques, c'est à dire où (PT, PV) = any, PR=any et quel que soit la valeur de US.

| Plate-forme | Produit | Usage | |
|---|---|---|---|
| PT, PV ≠ any | PR ≠ any | US ≠ any | 1 |
| | | US = any | 2 |
| | PR = any | US non pris en compte | 3 |
| PT, PV = any | PR ≠ any | US ≠ any | 4 |
| | | US = any | 5 |
| | PR = any | US non pris en compte | 6 |

Une quatrième étape, référencée E4, consiste, dans le cas d'une mise-à-jour due à la disponibilité d'une nouvelle version de logiciel, à ne récupérer dans cette liste que les segments dont le « SegVersionld » est différent du « SegVersionld » stocké en mémoire et correspondant à la précédente mise-à-jour. Dans le cas où le téléchargement serait du à une corruption de certains segments dans le décodeur, la version récupérée est la même que celle que l'on possède déjà et l'on va récupérer les segments identifiés comme corrompus.

Une cinquième étape consiste à vérifier l'intégrité de chacun des segments récupérés grâce au CRC de chaque segment.

Une sixième étape consiste à stocker en mémoire les segments téléchargés.

Bien que l'exemple de réalisation de l'invention se situe dans le cadre des décodeurs de télévision numérique, il apparaîtra à l'homme du métier que l'invention peut s'appliquer à tous les appareils possédant des capacités de mise-à-jour de leur logiciel résident via un réseau de distribution de données.

## Revendications

1. Méthode de construction d'un support de distribution contenant une pluralité de versions de logiciel résident à destination d'une pluralité d'appareils, **caractérisée en ce qu'**elle comporte au moins les étapes suivantes :
- une identification, au sein de ladite pluralité de versions de logiciel résident, des parties communes à au moins deux versions de logiciel résident par analyse d'un jeu de paramètres (PT, PV, PR, US) définissant sa destination associé à chaque partie du logiciel résident;
- un découpage des différentes versions de logiciel résident en segments, dits segments de logiciel, et pour chacun desdits segments de logiciel, un marquage dudit segment de logiciel avec ledit jeu de paramètres (PT, PV, PR, US) définissant sa destination associé à une partie dont ledit segment de logiciel est issu;
- pour chaque segment de logiciel issu d'une partie d'un logiciel résident identifiée comme commune, dit segment commun, un marquage dudit segment commun par la mise à une valeur spécifique d'au moins un paramètre dudit jeu de paramètres, la valeur spécifique indiquant que ledit segment commun est destiné à toutes les plateformes matérielles;
- un assemblage desdits jeux de paramètres et desdits segments de logiciel au sein d'un support de distribution en incluant qu'une seule fois au sein du support de distribution les segments communs.

2. Méthode selon la revendication 1, **caractérisée en ce que** ladite valeur spécifique est attribuée à au moins un paramètre dudit jeu de paramètres qui est représentatif d'un identificateur de produit.

3. Méthode selon la revendication 2 où la pluralité d'appareils est une pluralité d'appareils de réception de télévision numériques.

4. Méthode selon la revendication 3 où le support de distribution est un flux de transport MPEG.

5. Méthode d'acquisition de tout ou partie d'une version de logiciel résident par un appareil possédant des moyens d'accès à un support de distribution distribué par un réseau de distribution
**caractérisée en ce que**, ledit support comportant une pluralité de segments composant une pluralité de versions de logiciel résident et étant construit selon la méthode de la revendication 1, la méthode comporte au moins les étapes suivantes :
- l'acquisition des jeux de parmètres décrivant les segments inclus dans le support de distribution (E1) ;
- l'identification au sein du support de distribution d'au moins un segment de logiciel destiné audit appareil par analyse du jeu de paramètres (PT, PV, PR, US) associé (E3) ;
- le téléchargement dudit segment identifié au sein de l'appareil depuis ledit support de distribution (E4) ;
- le stockage en mémoire dudit segment (E6).

6. Méthode selon la revendication 5 où l'étape d'identification au sein du support de distribution comporte une étape de comparaison d'un jeu d'identificateurs (PT, PV, PR, US) identifiant au sein de chaque segment les appareils visés par la version de logiciel résident auquel le segment appartient et un jeu d'identificateurs résident sur l'appareil et codant son type et son utilisation.

7. Méthode selon la revendication 6 où le jeu de d'identificateurs contient au moins un identificateur de plate-forme (PT,PV) identifiant le type précis de version matérielle de l'appareil, un identificateur de produit (PR) identifiant l'opérateur déployant l'appareil et un identificateur d'usage (US) identifiant l'usage prévu de l'appareil.

8. Méthode selon la revendication 7 où l'appareil est un récepteur de télévision numérique et le support de distribution un flux de transport MPEG.

9. Support de distribution d'une pluralité de versions de logiciel résident à destination d'une pluralité d'appareils, **caractérisé en ce que** ledit support de distribution a été contruit selon la méthode de la revendication 1.

10. Support selon la revendication 9 où chaque segment possède un jeu d'identificateurs (PT, PV, PR, US) identifiant au sein de chaque segment les appareils visés par la version de logiciel résident auquel le segment appartient.

11. Support selon la revendication 10 où le jeu de d'identificateurs contient au moins un identificateur de Plate-formel (PT, PV) identifiant le type précis de
de l'appareil, de l'opérateur version matérielle de l'appareil, un identificaleur de produit (PR) identifiant l'opérateur opérant l'appareil et un identificateur d'usage (US) identifiant l'usage prévu de l'appareil.

12. Support selon la revendication 11 ayant la forme d'un flux de transport MPEG.

13. Appareil possédant des moyens d'accès à un support de distribution contenant une pluralité de versions de logiciel résident à destination d'une pluralité d'appareils et étant construit selon la méthode de la revendication 1, **caractérisé en ce que** ces versions étant découpées en une pluralité de segments au sein du support de distribution, ledit appareil possédant
des moyens de déterminer les segments faisant partie d'une version de logiciel résident lui étant destinés parmi la pluralité de segments présents au sein du support de distribution par analyse du jeu de paramètres (PT, PV, PR, US) associé,
des moyens de télécharger des segments présents au sein du support de distribution,
et des moyens de stocker ces segments.

14. Appareil selon la revendication 13 où l'appareil possède un jeu d'identificateurs (PT, PV, PR, US) codant son type et son utilisation et des moyens de comparaison de ce jeu d'identificateurs avec un jeu d'identificateurs chacun correspondant à chaque segment présent au sein du support de distribution et identifiant les appareils visés par la version de logiciel résident auquel le segment appartient.

15. Appareil selon la revendication 14 où les moyens d'accès à un support de distribution sont des moyens d'accès à un flux de transport MPEG.

## Patentansprüche

1. Verfahren zur Erstellung eines Verteilungsmediums, das eine Vielzahl von Versionen einer residenten Software mit dem Ziel einer Vielzahl von Geräten enthält, **dadurch gekennzeichnet, dass** das Verfahren mindestens die folgenden Schritte umfasst:
- ein Identifizieren von Teilen in der besagten Vielzahl von Versionen der residenten Software, die mindestens zwei Versionen der residenten Software gemeinsam haben, durch Analyse eines Satzes von Parametern (PT, PV, PR, US), die ihr Ziel definieren, der mit jedem Teil der residenten Software verbunden ist;
- ein Aufteilen unterschiedlicher Versionen der residenten Software in Segmente, als Softwaresegmente bezeichnet, und für jedes der besagten Softwaresegmente ein Kennzeichnen des besagten Softwaresegments, mit dem Satz von Parametern (PT, PV, PR, US), die ihr Ziel definieren, der mit einem Teil verbunden ist, aus dem das besagte Softwaresegment hervorgeht;
- für jedes Softwaresegment, das aus einem Teil einer residenten Software hervorgeht, der als gemeinsam identifiziert wurde, als gemeinsames Segment bezeichnet, ein Kennzeichnen des besagten gemeinsamen Segments durch den Einsatz eines spezifischen Werts mindestens eines Parameters aus dem besagten Satz von Parametern, wobei der spezifische Wert anzeigt, dass das besagte gemeinsame Segment an alle Hardware-Plattformen gerichtet ist;
- ein Zusammenstellen der besagten Sätze von Parametern und der besagten Softwaresegmente in einem Verteilungsmedium, indem die gemeinsamen Segmente einmalig in das Verteilungsmedium einbezogen werden.

2. Verfahren nach Anspruch 1, **dadurch gekennzeichnet, dass** der spezifische Wert einem Parameter aus dem besagten Satz von Parametern zugeordnet ist, der für eine Produktkennung repräsentativ ist.

3. Verfahren nach Anspruch 2, wobei die Vielzahl von Geräten eine Vielzahl von digitalen Fernsehempfangsgeräten ist.

4. Verfahren nach Anspruch 3, wobei das Verteilungsmedium ein MPEG-Transportstrom ist.

5. Verfahren zum Beziehen der gesamten oder eines Teils einer Version einer residenten Software durch ein Gerät, das über Mittel zum Zugriff auf ein Verteilungsmedium verfügt, das durch ein Verteilungsnetz verteilt wird,
**dadurch gekennzeichnet, dass** das Medium eine Vielzahl von Segmenten umfasst, die sich aus einer Vielzahl von Versionen der residenten Software zusammensetzen und gemäß dem Verfahren nach Anspruch 1 erstellt werden, wobei das Verfahren mindestens die folgenden Schritte umfasst:
- das Beziehen von Sätzen von Parametern, die die Segmente beschreiben, die in dem Verteilungsmedium enthalten sind (E1);
- das Identifizieren mindestens eines Softwaresegments, das an das besagte Gerät gerichtet ist, in dem Verteilungsmedium durch Analyse des damit verbundenen Satzes von Parametern (PT, PV, PR, US) (E3);
- das Herunterladen des besagten identifizierten Segments in das Gerät von dem besagten Verteilungsmedium (E4);
- das Speichern des besagten Segments in einem Speicher (E6) .

6. Verfahren nach Anspruch 5, wobei der
Identifizierungsschritt in dem Verteilungsmedium einen Schritt des Vergleichens eines Satzes von Kennungen (PT, PV, PR, US), die in jedem Segment die Geräte identifizieren, die von der Version der residenten Software vorgesehen sind, zu der das Segment gehört, und eines Satzes von Kennungen, die in dem Gerät resident sind und dessen Typ und dessen Verwendung codieren, umfasst.

7. Verfahren nach Anspruch 6, wobei der Satz von Kennungen mindestens eine Kennung einer Plattform (PT, PV), die den genauen Typ der Hardware-Version des Geräts identifiziert, eine Kennung eines Produkts (PR), die den Bediener identifiziert, der das Gerät anwendet, und eine Kennung einer Verwendung (US), die die für das Gerät vorgesehene Verwendung identifiziert, enthält.

8. Verfahren nach Anspruch 7, wobei das Gerät ein digitaler Fernsehempfänger ist und das Verteilungsmedium ein MPEG-Transportstrom ist.

9. Verteilungsmedium für eine Vielzahl von Versionen einer residenten Software mit dem Ziel einer Vielzahl von Geräten, **dadurch gekennzeichnet, dass** das Verteilungsmedium gemäß dem Verfahren nach Anspruch 1 erstellt wurde.

10. Medium nach Anspruch 9, wobei jedes Segment über einen Satz von Kennungen (PT, PV, PR, US) verfügt, die in jedem Segment die Geräte identifizieren, die von der Version der residenten Software vorgesehen sind, zu der das Segment gehört.

11. Medium nach Anspruch 10, wobei der Satz von Kennungen mindestens eine Kennung einer Plattform (PT, PV), die den genauen Typ der Hardware-Version des Geräts identifiziert, eine Kennung eines Produkts (PR), die den Bediener identifiziert, der das Gerät bedient, und eine Kennung einer Verwendung (US), die die für das Gerät vorgesehene Verwendung identifiziert, enthält.

12. Medium nach Anspruch 11, das die Form eines MPEG-Transportstroms hat.

13. Gerät, das über Mittel zum Zugriff auf ein Verteilungsmedium verfügt, das eine Vielzahl von Versionen einer residenten Software mit dem Ziel einer Vielzahl von Geräten enthält und gemäß dem Verfahren nach Anspruch 1 erstellt wird, **dadurch gekennzeichnet, dass** diese Versionen in eine Vielzahl von Segmenten in dem Verteilungsmedium aufgeteilt werden, wobei das Gerät über Mittel zum Bestimmen der Segmente, die einen Teil einer an sie gerichteten Version der residenten Software bilden, aus der Vielzahl von Segmenten, die in dem Verteilungsmedium vorliegen, durch Analyse des damit verbundenen Satzes von Parametern (PT, PV, PR, US),
Mittel zum Herunterladen von Segmenten, die in dem Verteilungsmedium vorliegen,
und Mittel zum Speichern dieser Segmente verfügt.

14. Gerät nach Anspruch 13, wobei das Gerät über einen Satz von Kennungen (PT, PV, PR, US), die dessen Typ und dessen Verwendung codieren, und Mittel zum Vergleichen dieses Satzes von Kennungen mit einem Satz von Kennungen, die jeweils jedem Segment entsprechen, das in dem Verteilungsmedium vorliegt, und die Geräte identifizieren, die von der Version der residenten Software vorgesehen sind, zu der das Segment gehört, verfügt.

15. Gerät nach Anspruch 14, wobei die Mittel zum Zugriff auf ein Verteilungsmittel Mittel zum Zugriff auf einen MPEG-Transportstrom sind.

## Claims

1. Method for constructing a distribution medium containing a plurality of resident software versions intended for a plurality of devices, **characterized in that** it comprises at least the following steps:
- identification, within the said plurality of resident software versions, of the parts common to at least two resident software versions by analysis of a set of parameters (PT, PV, PR, US) defining its destination associated with each part of the resident software;
- dividing the different resident software versions into segments, called software segments, and for each of the said software segments, marking each software segment with the said set of parameters (PT, PV, PR, US) defining its destination associated with a part from which the said software segment originates;
- for each software segment from a part of a resident software identified as common, called common segment, marking the said common segment by setting at a specific value at least one parameter of the said set of parameters, the specific value indicating that the said common segment is intended for all hardware platforms;
- assembly of the said set of parameters and the said software segments within a distribution medium by including the common segments only once within the distribution medium.

2. Method according to claim 1, **characterized in that** the said specific value is assigned to at least one parameter of the said set of parameters which is representative of a product identifier.

3. Method according to claim 2 wherein the plurality of devices is a plurality of digital television reception devices.

4. Method according to claim 3 wherein the distribution medium is an MPEG transport stream.

5. Method for acquiring all or part of a resident software version by a device having access means to a distribution medium distributed by a distribution network
**characterized in that**, the said medium comprising a plurality of segments composing a plurality of resident software versions and being constructed according to the method of claim 1, the method comprises at least the following steps:
- acquisition of sets of parameters describing the segments included in the distribution medium (E1);
- identification within the distribution medium of at least one software segment intended for the said device by analysis of the associated set of parameters (PT, PV, PR, US) (E3);
- downloading of the said segment identified within the device from the said distribution medium (E4);
- storage in memory of the said segment (E6).

6. Method according to claim 5 wherein the step of identification within the distribution medium comprises a comparison step of a set of identifiers (PT, PV, PR, US) identifying within each segment the devices targeted by the resident software version to which the segment belongs and a set of resident identifiers on the device and coding its type and usage.

7. Method according to claim 6 wherein the set of identifiers contains at least one platform identifier (PT, PV) identifying the specific type of hardware version of the device, a product identifier (PR) identifying the operator deploying the device and a usage identifier (US) identifying the planned usage of the device.

8. Method according to claim 7 wherein the device is a digital television receiver and the distribution medium an MPEG transport stream.

9. Distribution medium of a plurality of resident software versions intended for a plurality of devices, **characterized in that** the said distribution medium has been constructed according to the method of claim 1.

10. Medium according to claim 9 wherein each segment has a set of identifiers (PT, PV, PR, US) identifying within each segment the devices targeted by the resident software version to which the segment belongs.

11. Medium according to claim 10 wherein the set of identifiers contains at least one platform identifier (PT, PV) identifying the specific type of hardware version of the device, a product identifier (PR) identifying the operator operating the device and a usage identifier (US) identifying the planned usage of the device.

12. Medium according to claim 11 having the form of an MPEG transport stream.

13. Device having means of access to a distribution medium containing a plurality of resident software versions intended for a plurality of devices and being constructed according to the method of claim 1, **characterized in that** these versions being divided into a plurality of segments within the distribution medium, the said device having means for determining the segments being part of a resident software version being intended for it among the plurality of segments present within the distribution medium by analysis of the associated set of parameters (PT, PV, PR, US),
means for downloading the segments present within the distribution medium and means for storing these segments.

14. Device according to claim 13 wherein the device has a set of identifiers (PT, PV, PR, US) coding its type and its use and means of comparison of this set of identifiers with a set of identifiers each corresponding to each segment present within the distribution medium and identifying the devices targeted by the resident software version to which the segment belongs.

15. Device according to claim 14 wherein the means of access to a distribution medium is the means of access to an MPEG transport stream.
